# EUROPÄISCHE PATENTANMELDUNG

(11) **EP 1 277 954 A2**
(43) Veröffentlichungstag der Anmeldung: **22.01.2003**
(21) Anmeldenummer: 02013043.1
(22) Anmeldetag: 13.06.2002
(51) Int. Cl.: F03D 11/04

(54) **Windenergieanlage**

(30) Priorität: 17.07.2001 DE 10134829; 25.08.2001 DE 10141733
(71) Anmelder: Schlemenat, Alfred, 45701 Herten (DE)
(72) Erfinder: Schlemenat, Alfred, 45701 Herten (DE)

(57) **Zusammenfassung**

Die Erfindung betrifft eine Windenergieanlage mit einem Turm (2), mit einer in einer Gondel (5) drehbaren Rotorwelle (7) und mit Rotorblättern (8), an denen Windkräfte auf die Rotorwelle (7) wirken.

Sie zeichnet sich dadurch aus, dass eine Tragkonstruktion (10) an der Unterseite der Gondel (5) angeordnet, sich innerhalb des Turmes (2) vertikal zur Einspannstelle (1) erstreckt und mit der Gondel (5) dreh- und verwindungssteif zu einer Funktionseinheit (11) verbunden ist. Zur Verbesserung des dynamischen Tragverhaltens werden an der Tragkonstruktion (10) Komponenten zur Umwandlung der mechanischen Energie in eine andere Energieform angeordnet, beispielsweise mehrere Generatoren (15'). Die Rotorwelle (7) erstreckt sich von der Luv- zur Leeseite, die Gondel (5) weist luv- und leeseitige, konventionelle und kostengünstige Lager (12, 12') auf. Es stellt sich ein optimaler Kraftfluss ein. Die Lagerkräfte werden direkt in den Turm eingeleitet. Die Anordnung der Rotornabe (9) erfolgt sowohl luv- oder leeseitig als auch luv- und leeseitig.

## Beschreibung

Die Erfindung betrifft eine Windenergieanlage der im Oberbegriff des Anspruches 1 angegebenen Gattung. Derartige Windenergieanlagen gehören zum Stand der Technik. Das Zusammenwirken der Hauptkomponenten zur Nutzung der Strömungsenergie des Windes ist dem Fachmann geläufig. Es wird beispielsweise in den deutschen Fachbüchern "Windkraftanlagen", Hau, Erich: Springer Verlag (1988) und (1996, 2. Auflage) beschrieben.

Bei den bekannten Windenergieanlagen ist das Anschlußprinzip der Turm-/Gondelverbindungen aufgrund spezifizierter Forderungen der Lagerhersteller nahezu gleich. Diese schreiben eine regelmäßige Kontrolle der Schraubenvorspannkräfte an den Befestigungsschrauben zum Lager vor, so dass ein freier Zugang zu den Schrauben gewährleistet sein muß. Dieses führt dazu, dass bei den bekannten Windenergieanlagen die erforderlichen Hauptkomponenten zur Umwandlung der mechanischen Energie der Rotorwelle in eine andere Energieform oberhalb der Turm-/Gondelverbindung in der Gondel angeordnet sind. Hinsichtlich dem Eigenschwingverhalten weisen diese jedoch einen ungünstigen Abstand zur Turmeinspannung auf. Dieser wirkt sich auf das dynamische Tragverhalten einer Anlage negativ aus.

Die Verbindung der Turmsegmente erfolgt über vorgespannte Schrauben, die infolge der unstetigen Windeinwirkung besonders ermüdungsbruchgefährdet sind. So werden lockere Schrauben häufig festgestellt, obwohl sie mit größter Sorgfalt ausgelegt werden. Sie sind als Auslöser nicht erklärbarer Lager- und Getriebeschäden in Betracht zu ziehen.

Dieses wird durch zahlreiche in der jüngsten Vergangenheit aufgetretene Schäden bestätigt. In der aktuellen Literaturstelle Jansen, Marcus: "Dynamische Lasten am Triebstrang untersuchen", Erneuerbare Energien Juli 2001, Seite 36 ff, (SunMedia Verlag, Hannover) werden die gegenwärtigen Schäden an Lagern und Getrieben auf nicht hinreichend berücksichtigte dynamische Beanspruchungen bei der Dimensionierung von Windenergieanlagen zurückgeführt. Erkenntnisse aufgrund logischer Folgerungen, dass Gewichtsreduzierungen am Kopf einer Anlage zu einer Verringerung aller auf den Turm einwirkenden dynamischen Belastungen führen, sind an den bekannten Windenergieanlagen aufgrund der zuvor dargestellten Turm- / Gondelverbindungen nur begrenzt zu nutzen.

Auch erschweren Bürgereinsprüche in Genehmigungsverfahren die Errichtung von neuen Anlagen. Dieses wird in einem verstärkten Maß zu einer effizienten Nutzung der ausgewiesenen Standorte führen. Neue Anlagen mit einer größeren Leistung können jedoch nur selten auf den Fundamenten älterer oder ausgedienter Anlagen errichtet werden.

Aufgabe der Erfindung ist es, das dynamische Trag- und Eigenschwingverhalten einer Windenergieanlage dahingehend zu verbessern, dass die zuvor beschriebenen Schäden minimiert bzw. ausgeschlossen werden, dass die aus dynamischen Lasten auftretenden Fundamentbelastungen besonders für neue Anlagen der größeren Leistungsklassen reduziert werden und dass auf vorhandenen Fundamenten leistungsstärkere neue Anlagen errichtet werden können.

Die Aufgabe wird erfindungsgemäß durch die in dem Anspruch 1 gekennzeichneten Merkmale gelöst. Die Unteransprüche beziehen sich auf vorteilhafte weitere Ausgestaltungen der Erfindung.

An der Unterseite der Gondel wird eine in den Turm hineinragende Tragkonstruktion dreh- und verwindungssteif mit dieser verbunden. Gondel und Tragkonstruktion bilden eine Funktionseinheit. Hauptkomponenten zur Umwandlung der mechanischen Energie in eine andere Energieform werden nicht mehr in der Gondel, sondern maßgeblich näher zum Turmfuß hin an der Tragkonstruktion angeordnet. Durch die Verlagerung der Komponenten aus der Gondel heraus weisen diese einen günstigen Abstand zur Turmeinspannung auf und führen zu einer Verbesserung des Eigenschwingverhaltens der gesamten Anlage. Vom Tragverhalten bietet sich eine zylindrische Gestaltung der Tragkonstruktion an. Die drehbare Lagerung der Funktionseinheit um die Turmlängsachse erfolgt über ein Lager, welches mit der Tragkonstruktion oder in der bekannten Art mit der Gondel an dem Turm verspannt ist. Die Verspannung des Lagers erfolgt jedoch mit einem neuen Verbindungssystem gemäß der EP 1 010 931. Schrauben übertragen bei diesem System keine Kräfte und Momente, so dass Schraubenrelaxation und Materialermüdung nicht auftreten. Die an den bekannten Windenergieanlagen zwingend vorgeschriebenen regelmäßigen Kontrollen der Schraubenvorspannkräfte sind nicht mehr erforderlich. Dieses führt zu der verdeckten Anordnung und wartungsfreien Verspannung des Lagers. Ein weiteres Lager leitet im unteren Bereich der Tragkonstruktion Horizontalkräfte direkt in den Turm. Dieses führt zu einer maßgeblichen Reduzierung der Biegebeanspruchungen an dem Lager Funktionseinheit/Turm.

Entgegen der Gondelausführungen bei den bekannten Windenergieanlagen ist nun eine von den räumlichen Abmessungen her wesentlich kleinere und vom Gewicht her günstigere Gondel erforderlich. Diese wird in der Verlängerung der Turmstruktur vorteilhaft zylindrisch ausgeführt.

Der freie Raum in der Gondel wird zur Verlängerung der Rotorwelle von der Luv- zur Leeseite genutzt. Der große Lagerabstand führt zu dem angestrebten günstigen Eigenschwingverhalten der Rotorwelle und zur Verwendung konventioneller und kostengünstiger Lager. Die Lagerkräfte sind leicht zu beherrschen. Zur Aufnahme der Lager werden relativ dickwandige Blockflansche, wie sie im Hochdruckapparatebau üblich sind und den Stand der Technik darstellen, direkt in die Zylinderschale eingeschweißt. Dieses führt zu einem optimalen Kraftfluss. Sämtliche Kräfte werden über die Gondelwand direkt in die Turmwand eingeleitet.

Bei den bekannten Anlagen übersteigt bei großen Windstärken das Energieangebot aus der Luftströmung oft das von einem Generator abnehmbare Maß. Ein Leistungsüberschuss wird häufig nicht genutzt. Die Anordnung mehrerer Generatoren der bewährten kleineren Leistungsklassen näher zum Turmfundament führt dagegen zur optimalen Ausnutzung des Energieangebotes und damit zur Vergrößerung des Arbeitsbereiches einer Anlage. Entsprechend der Windgeschwindigkeit wird ein Generator oder eine entsprechend große Anzahl von Generatoren aktiviert. Neben der angestrebten Verbesserung des dynamischen Tragverhaltens der Anlage stellen sich weitere Vorteile ein. So ist ein Außenkran nicht mehr erforderlich, da die Montage und ein reparaturbedingter Austausch der relativ kleinen Komponenten aus dem Inneren des Turmes heraus erfolgen kann. Dieses wird sich besonders an Großanlagen für den Offshore-Einsatz kostengünstig auswirken.

Zusätzlich zu der luv- oder leeseitigen Rotornabe ist eine zweite Rotornabe an dem gegenüberliegenden freien Ende der Rotorwelle anzuordnen. Zur effektiven Nutzung der Strömungsenergie des Windes wird mittels einer aerodynamischen Optimierung die Anordnung, Ausführung und Stellung der Rotorblätter zueinander festgelegt. Diese werden in Drehrichtung der Rotorwelle dauerhaft fest oder in Abhängigkeit der Rotordrehzahl veränderbar so zueinander ausgerichtet, dass die auf die Drehrichtung der Rotationsachse bezogene Winkelstellung eine optimale Übertragung der Energie auf beide Rotornaben sicherstellt. Dabei schließt das relativ große Verhältnis Rotorblattdurchmesser zur axialen Erstreckung der luv- und leeseitigen Rotorblätter eine Beeinflussung der leeseitig angeordneten Rotorblätter durch auftretende Luftverwirbelungen aus.

Einflüsse aus dem Turmstau- und Turmschatteneffekt lassen sich mittels einer Optimierung der beeinflussenden Längen der Wellenenden aufgrund des relativ großen Lagerabstands minimieren. Anzustrebende gleich große Trägheitskräfte der beiden Rotornaben wirken sich auf die Drehschwingungen der Rotorwelle günstig aus. Die doppelte Anzahl der Rotorblattanordnungen halbiert gegenüber den bekannten Anlagen die Kräfte und Momente am Rotorblattanschluss. Dagegen ist bei gleichen Belastungen an der Rotornabe, beispielsweise durch eine Verlängerung der Blattlänge eine Verdoppelung der auf die Rotorwelle zu übertragenden Leistung zu erzielen.

Die Übertragung der Rotationsenergie der Rotorwelle auf die in einem vertikalen Abstand näher zum Turmfuß hin angeordneten Komponenten erfolgt über eine Wirkverbindung. Diese setzt sich aus Standardkomponenten zusammen, beispielsweise mechanisch oder hydraulisch wirkende Getriebe, Wellen oder weiteren Kraftübertragungselementen. Diese werden entsprechend den konstruktiven Gegebenheiten einzeln, mehrfach oder in Kombination zueinander angeordnet. Die Länge der in den Turm hineinreichenden Tragkonstruktion beeinflußt entscheidend die dynamischen Belastungen der gesamten Anlage, sie vergrößert im gleichen Maß jedoch auch den vertikalen Abstand zum Weiterleiten der mechanischen Energie. Die zu erzielenden Vorteile müssen daher in ökonomischer Relation zu den Herstellungskosten stehen.

Besonders an Anlagen der größeren Leistungsklassen mit großen Turmdurchmessern werden Komponenten und gegebenenfalls auch zusätzliche Ballastgewichte mit einem größten konstruktiv zu erreichenden Abstand zur Turmmitte luvseitig an der Tragkonstruktion angeordnet. Deren Massen erzeugen mit dem Hebelarm zur Turmmittenachse ein Moment. Dieses wirkt dem Windmoment entgegen und führt zu einer Reduzierung der Biegebeanspruchungen am Fundament. Zudem steigen mit zunehmender Größe einer Anlage die Bauteilgewichte der erforderlichen Aggregate zum Nachführen des Turmkopfes entsprechend der Windrichtung enorm an. Bei der vorliegenden Erfindung werden diese einschließlich der Feststelleinrichtungen im unteren Bereich an der Tragkonstruktion angeordnet und wirken mit einem stark reduzierten Hebelarm zur Turmeinspannung. Dieses beeinflußt das dynamische Tragverhalten der gesamten Anlage ebenfalls positiv. Da eine leeseitige Anordnung der Rotornabe aus physikalischen Gründen hinsichtlich der Windrichtungsnachführung stabil ist, bewirkt eine luv- und leeseitige Rotornabe einen fast theoretischen Kräfteausgleich. Dieses führt zu relativ geringen Bauteilgewichten und somit zu kostengünstigen Aggregaten zum Nachführen und Feststellen der Gondel.

Ein Ausführungsbeispiel der Erfindung wird im folgenden mit Bezug auf die anliegende Zeichnung beschrieben.

Die schematische Schnittdarstellung zeigt die erfindungsgemäße Windenergieanlage mit einem zylindrischen Turm 2 und einer Gondel 5. An dieser ist eine in den Turm 2 hineinragende, ebenfalls zylindrische Tragkonstruktion 10 dreh- und verwindungssteif angeschlossen. Gondel 5 und Tragkonstruktion 10 bilden eine Funktionseinheit 11. Diese ist drehbar um die Turmlängsachse 3 mit dem Turm 2 über ein Lager 4 verspannt. Die Verspannung des Lagers erfolgt mit einem Verbindungssystem gemäß der EP 1 010 931. Schrauben übertragen keine Kräfte und Momente. Einzelheiten der Verbindung sind nicht dargestellt. Am unteren Ende der Tragkonstruktion 10 ist zwischen dieser und dem Turm 2 ein weiteres Lager 13 angeordnet. Dieses überträgt Horizontalkräfte von der Tragkonstruktion 10 direkt auf Turm 2, das Lager 4 wird von Biegebeanspruchungen entlastet. An der Tragkonstruktion sind mehrere Generatoren 15, 15' schematisch dargestellt.

Die Gondel 5 ist in der Verlängerung der zylindrischen Turmkonstruktion zylindrisch ausgeführt. Die Rotorwelle 7 erstreckt sich innerhalb der Gondel 5 von der Luv- zur Leeseite. Zur Aufnahme der Lager 12, 12' weist die Zylinderschale zwei relativ dickwandige Blockflansche auf. In diesen ist die Rotorwelle 7 gelagert. Aufgrund eines optimalen Kraftflusses werden die Lagerkräfte direkt über die Gondelwand in die Turmwand eingeleitet.

Luv- und leeseitig weist die Windenergieanlage je eine Rotornabe 9 und 9' auf. Die Rotorblätter 8 und 8' sind nur als Blattanschluss dargestellt. Erfolgt entgegen diesem Ausführungsbeispiel der Anschluß von nur einer Rotornabe, endet die Rotorwelle nach dem gegenüberliegenden Lager. Die Kraftübertragung von der Rotorwelle 7 zu den in einem vertikalen Abstand angeordneten Generatoren 15' erfolgt über eine Wirkverbindung 14. Diese ist nur schematisch eingezeichnet.

### Bezugsziffernliste:

- 1: Einspannstelle des Turmes (2)
- 2: Turm
- 3: Turmlängsachse
- 4: Lager im oberen Bereich des Turmes (2)
- 5: Gondel
- 6: Rotationsachse der Rotorwelle (7)
- 7: Rotorwelle
- 8: Rotorblätter (8, 8')
- 9: Rotornabe (9, 9')
- 10: Tragkonstruktion
- 11: Funktionseinheit Gondel (5) / Tragkonstruktion (10)
- 12: Lager (12, 12') zur Lagerung der Rotorwelle (7)
- 13: Lager oder Abstützelement zwischen Turm und Tragkonstruktion
- 14: Wirkverbindung
- 15: Generator (15, 15')

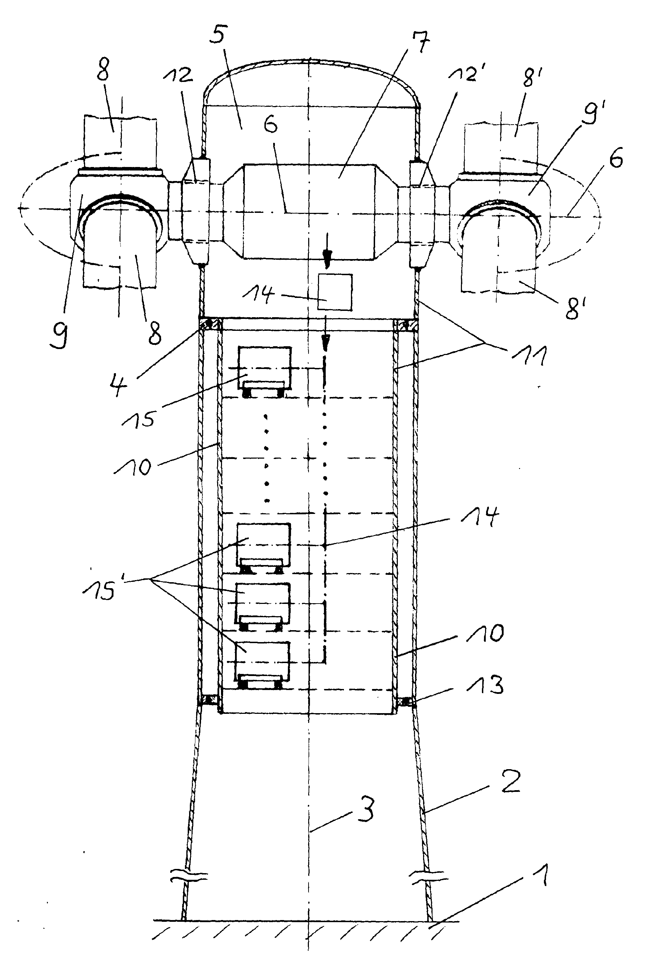

## Patentansprüche

1. Windenergieanlage
mit einem an einer Einspannstelle (1) verspannten Turm (2),
mit einem im oberen Bereich des Turmes (2) um eine Turmlängsachse (3) drehbaren Lager (4),
mit einer einseitig, luv- oder leeseitig in einer Gondel (5) um eine Rotationsachse (6) drehbaren Rotorwelle (7)
und mit Rotorblättern (8), an denen Windkräfte zur Umwandlung der Strömungsenergie des Windes in mechanische Energie über eine luv- oder leeseitige Rotornabe (9) auf die Rotorwelle (7) wirken,
**dadurch gekennzeichnet,**
**dass** eine Tragkonstruktion (10) an der Unterseite der Gondel (5) angeordnet, sich innerhalb des Turmes (2) vertikal zur Einspannstelle (1) erstreckt und mit der Gondel (5) dreh- und verwindungssteif zu einer Funktionseinheit (11) verbunden ist, dass an der Tragkonstruktion (10) Komponenten zur Umwandlung der mechanischen Energie in eine andere Energieform angeordnet sind, dass die Rotorwelle (7) innerhalb der Gondel (5) verlängert ist und sich von der Luv- zur Leeseite hin erstreckt, dass die Gondel (5) in der Verlängerung der Rotationsachse (6) luv- und leeseitige Lager (12, 12') aufweist und dass in diesen die Rotorwelle (7) gelagert ist.

2. Windenergieanlage nach Anspruch 1,
**dadurch gekennzeichnet,**
**dass** die Gondel (5) gegenüberliegend der luv- oder leeseitigen Rotornabe (9) eine weitere, mehrere Rotorblätter (8') tragende Rotornabe (9') aufweist und dass die luv- und leeseitigen Rotorblätter (8, 8') eine derartige auf die Drehrichtung der Rotationsachse (6) bezogene Winkelstellung zueinander aufweisen, dass sie die Strömungsenergie des Windes optimal auf die luv- und leeseitige Rotornabe (9, 9') übertragen.

3. Windenergieanlage nach Anspruch 1 oder 2,
**dadurch gekennzeichnet,**
**dass** die Funktionseinheit (11) im Bereich der Tragkonstruktion (10) an dem Lager (4) drehbar um die Turmlängsachse (3) verspannt ist.

4. Windenergieanlage nach einem oder mehreren der Ansprüche 1 bis 3,
**dadurch gekennzeichnet,**
**dass** zwischen der Tragkonstruktion (10) und dem Turm (2) zusätzlich zu dem einen Lager (4) mindestens ein weiteres Lager oder eine Abstützkonstruktion (13) angeordnet ist.

5. Windenergieanlage nach einem oder mehreren der Ansprüche 1 bis 4,
**dadurch gekennzeichnet,**
**dass** die Rotorwelle (7) ein- oder mehrteilig, aus einem Voll- und/oder einem Hohlprofil besteht.

6. Windenergieanlage nach einem oder mehreren der vorangehenden Ansprüche,
**dadurch gekennzeichnet,**
**dass** zwischen der Rotorwelle (7) und den an der Tragkonstruktion (10) angeordneten Komponenten eine den vertikalen Abstand überbrückende Wirkverbindung (14) angeordnet ist, die aus Komponenten wie Hydraulikaggregate, Getriebe, Wellen oder weiteren Kraftübertragungselementen besteht, die jeweils einzeln oder in Kombinationen zueinander angeordnet werden.

7. Windenergieanlage nach einem oder mehreren der vorangehenden Ansprüche,
**dadurch gekennzeichnet,**
**dass** die an der Tragkonstruktion (10) angeordneten Komponenten einen Generator (15) oder mehrere Generatoren (15') zur Umwandlung der mechanischen Energie in elektrische Energie aufweisen.
